# EUROPEAN PATENT SPECIFICATION

(11) **EP 1 184 642 B1**
(45) Date of publication and mention of the grant of the patent: **23.03.2005**
(21) Application number: 00901941.5
(22) Date of filing: 27.01.2000
(51) Int. Cl.: G01C 21/00, G08G 1/13, G08B 25/10

(54) **EMERGENCY INFORMATION SYSTEM AND NAVIGATION SYSTEM**
NOTFALL-INFORMATIONSSYSTEM UND NAVIGATIONSSYSTEM
SYSTEME D'INFORMATIONS D'URGENCE ET SYSTEME DE NAVIGATION

(43) Date of publication of application: 06.03.2002
(60) Divisional application: 04028309.5
(73) Proprietor: Matsushita Electric Industrial Co., Ltd., Kadoma-shi, Osaka 571-0050 (JP)
(72) Inventor: YOSHIOKA, Kenji, Yokohama-shi, Kanagawa 222-0034 (JP); NAKAMA, Yasutoshi, Ikoma-shi, Nara 630-0041 (JP); YAMAMOTO, Masashi, Sagamihara-shi, Kanagawa 229-0004 (JP)
(74) Representative: Hössle Kudlek & Partner
(86) International application number: PCT/JP2000/000425
(87) International publication number: WO 2001/055676

(56) References cited:
- EP-A- 0 837 341
- JP-A- 2000 048 290
- US-A- 5 418 537
- US-A- 5 504 482
- US-A- 5 515 043
- US-A- 5 572 204

## Description

### TECHNICAL FIELD

The present invention relates to an emergency communication system and a navigation system connected to a terminal unit of the emergency communication system. The emergency communication system is installed on a vehicle such as an automobile and is provided with terminal unit having functions to transmit data such as the present position of a vehicle, registered number of vehicle, etc. to a center for controlling the emergency communication system such as police station, emergency communication center, etc. via emergency communication conveying means in an emergency such as traffic accident, sudden illness, etc.

### BACKGROUND ART

In the past, an emergency communication system-has been known, which is installed on a vehicle such as an automobile and is provided with emergency communication conveying means for performing telephone transmission processing via a base station of a communication firm to a center for controlling the emergency communication system such as police station, emergency communication center, etc.

However, in the conventional type emergency communication system, it was not possible to output data such as advancing direction of the vehicle inputted from a gyro sensor in the emergency communication system terminal unit and data such as position information inputted from a GPS receiver in the emergency communication system terminal unit to external part of the emergency communication system terminal unit. In this respect, when a navigation system is installed on a vehicle where emergency communication system is provided, it has been necessary to provide a system for identifying position and status of the vehicle such as gyro sensor, GPS receiver, etc. on the navigation system.

### DISCLOSURE OF THE INVENTION

To overcome the above problems in the prior art, it is an object of the present invention to provide an emergency communication system for simplifying the structure of the navigation system, and also to provide a navigation system connected to the emergency communication system terminal unit.

To solve the above problems, the emergency communication system of the present invention is provided with data output means for outputting data such as advancing direction of the vehicle inputted from a gyro sensor in the emergency communication system terminal unit and data such as position information inputted from a GPS receiver in the emergency communication system terminal unit to a navigation system, which is connected to external part of the emergency communication system terminal unit. As a result, there is no need to provide a system for identifying position and status of the vehicle such as GPS receiver as required in the conventional type navigation system, and it contributes to the simplification of the structure of the navigation system.

According to a basic aspect of the present invention, there is provided an emergency communication system with an emergency communication system terminal unit to be installed on a vehicle such as an automobile, whereby the emergency communication system terminal unit comprises an emergency communication transmission button for starting transmission when a user presses it in an emergency such as traffic accident, sudden illness, etc., a gyro sensor for detecting advancing direction of the vehicle, a GPS antenna for receiving data from satellites, a GPS receiver for detecting the present position of the vehicle from the data received from the GPS antenna, a position information acquisition unit for generating position information based on a signal from the gyro sensor and the GPS receiver, a storage unit for storing various types of data, emergency communication conveying means for transmitting emergency information using a telephone number stored in the storage unit when the emergency communication transmission button is pressed, data output means for outputting data such as advancing direction of the vehicle inputted from the gyro sensor in the position information acquisition unit and data such as position information inputted from the GPS receiver to the navigation system connected to external part of the emergency communication system terminal unit, and a control unit for controlling the entire system. In this respect, there is no need to provide a system for identifying position and status of the vehicle such as a gyro sensor for generating information, e.g. advancing direction of the vehicle, and a GPS receiver for generating data such as position information from the data inputted from GPS antenna. As a result, when the emergency communication system terminal unit is provided, it is possible to simplify the structure of the navigation system.

According to another aspect of the present invention, data from the gyro sensor for generating information such as advancing direction of the vehicle and data for identifying position and status of the vehicle including position information generated from the data received by GPS receiver from GPS antenna as possessed by the position information acquisition unit of the emergency communication system of the above basic aspect of the invention are outputted to the navigation system by the data output means based on trigger condition such as a request of the navigation system connected to external part of the emergency communication system terminal unit or a timer in the control unit. In this respect, there is no need to provide a system for identifying position and status of the vehicle such as the gyro sensor for generating information including advancing direction of the vehicle, and GPS receiver for generating data including position information from the data inputted from GPS antenna. As a result, when the emergency communication system terminal unit is installed, it contributes to the simplification of the structure of the navigation system.

According to still another aspect of the present invention, data from the gyro sensor for generating information such as advancing direction of the vehicle as possessed by the position information acquisition unit of the emergency communication system of the above basic aspect of the invention is outputted to the navigation system by the data output means based on trigger condition such as a request of the navigation system connected to external part of the emergency communication system terminal unit or a timer in the control unit. In this respect, there is no need to provide the gyro sensor for generating the information such as advancing direction of the vehicle as needed by the navigation system. As a result, when the emergency communication system terminal unit is installed, it contributes to the simplification of the structure of the navigation system.

According to still another aspect of the present invention, data such as position information generated from the data received by GPS receiver from GPS antenna as possessed by the position information acquisition unit of the emergency communication system of the above basic aspect of the invention is outputted to the navigation system by the data output means based on trigger condition such as a request of the navigation system connected to external part of the emergency communication system terminal unit or a timer in the control unit. In this respect, there is no need to provide GPS antenna and GPS receiver as required by the navigation system. As a result, when the emergency communication system terminal unit is installed, it is possible to simplify the structure of the navigation system.

According to still another aspect of the present invention, a speed pulse data indicating the present speed of the vehicle as possessed by the position information acquisition unit of the emergency communication system of the above basic aspect of the invention is outputted to the navigation system by the data output means based on trigger condition such as a request of the navigation system connected to external part of the emergency communication system terminal unit or a timer in the control unit. In this respect, there is no need to provide a speed pulse receiving device as required by the navigation system. As a result, when this emergency communication system terminal unit is installed, it is possible to simplify the structure of the navigation system.

According to still another aspect of the present invention, a reverse data indicating advancing status of the vehicle such as moving forward or backward as possessed by the position information acquisition unit of the emergency communication system of the above basic aspect of the invention is outputted to the navigation system by the data output means based on trigger condition such as a request of the navigation system connected to external part of the emergency communication system terminal unit or a timer in the control unit. In this respect, there is no need to provide a reverse data receiving device as required by the navigation system. As a result, when the emergency communication system terminal unit is installed, it is possible to simplify the structure of the navigation system.

According to still another aspect of the present invention, a data of latitude and longitude as possessed by the position information acquisition unit of the emergency communication system of the above basic aspect of the invention is outputted to the navigation system by the data output means based on trigger condition such as a request of the navigation system connected to external part of the emergency communication system terminal unit or a timer in the control unit. In this respect, there is no need to provide an arithmetic unit for calculating latitude and longitude as required by the navigation system. As a result, when the emergency communication system terminal unit is installed, it is possible to simplify the structure of the navigation system.

According to still another aspect of the present invention, a data required for performing map matching as possessed by the position information acquisition unit of the emergency communication system of the above basic aspect of the invention is outputted to the navigation system by the data output means based on trigger condition such as a request of the navigation system connected to external part of the emergency communication system terminal unit or a timer in the control unit. In this respect, there is no need to provide an arithmetic unit for calculating the data necessary for performing map matching as required by the navigation system. As a result, when the emergency communication system terminal unit is installed, it is possible to simplify the structure of the navigation system.

According to still another aspect of the present invention, a data from the gyro sensor for generating information such as advancing direction of the vehicle and data such as position information generated from the data received from GPS antenna by GPS receiver and possessed by the position information acquisition unit of the emergency communication system of the above basic aspect of the invention is outputted to the navigation system by the data output means based on trigger condition such as a request of the navigation system connected to external part of the emergency communication system terminal unit or a timer in the control unit. When these data are outputted to the navigation system, non-synchronizing serial signal to be transferred only with data signal is used. In this respect, there is no need to provide a system for identifying position and status of the vehicle as required by the navigation system. As a result, when the emergency communication system terminal unit is installed, it is possible to simplify the structure of the navigation system.

According to still another aspect of the present invention, data from the gyro sensor for generating information such as advancing direction of the vehicle and data such as position information generated from the data received from GPS antenna by GPS receiver and possessed by the position information acquisition unit of the emergency communication system of the above basic aspect of the invention are outputted to the navigation system by the data output means based on trigger condition such as a request of the navigation system connected to external part of the emergency communication system terminal unit or a timer in the control unit. When these data are outputted to the navigation system by the data output means, synchronizing serial signal using synchronizing signal such as frame synchronizing signal, clock synchronizing signal, etc. is used. In this respect, there is no need to provide a system for identifying position and status of the vehicle as required by the navigation system. As a result, when the emergency communication system terminal unit is installed, it is possible to simplify the structure of the navigation system.

According to still another aspect of the present invention, data from the gyro sensor for generating information such as advancing direction of the vehicle and data such as position information generated from the data received from GPS antenna by GPS receiver and possessed by the position information acquisition unit of the emergency communication system of the above basic aspect of the invention are outputted to the navigation system by the data output means based on trigger condition such as a request of the navigation system connected to external part of the emergency communication system terminal unit or a timer in the control unit. When these data are outputted to the navigation system by the data output means, a bus signal using a parallel signal is used. In this respect, there is no need to provide a system for identifying position and status of the vehicle as required by the navigation system. As a result, when the emergency communication system terminal unit is installed, it is possible to simplify the structure of the navigation system.

According to still another aspect of the present invention, data from the gyro sensor for generating information such as advancing direction of the vehicle and data such as position information generated from the data received from GPS antenna by GPS receiver and possessed by the position information acquisition unit of the emergency communication system of the above basic aspect of the invention are outputted to the navigation system by the data output means based on trigger condition such as a request of the navigation system connected to external part of the emergency communication system terminal unit or a timer in the control unit. When these data are outputted to the navigation system by the data output means, LAN as commonly used in network communication is used. In this respect, there is no need to provide a system for identifying position and status of the vehicle as required by the navigation system. As a result, when the emergency communication system terminal unit is installed, it is possible to simplify the structure of the navigation system.

According to still another aspect of the present invention, data from the gyro sensor for generating information such as advancing direction of the vehicle and data such as position information generated from the data received from GPS antenna by GPS receiver and possessed by the position information acquisition unit of the emergency communication system of the above basic aspect of the invention are outputted to the navigation system by the data output means based on trigger condition such as a request of the navigation system connected to external part of the emergency communication system terminal unit or a timer in the control unit. When these data are outputted to the navigation system by the data output means, an infrared signal capable to transmit and receive data without requiring wired connection is used. It is possible to transmit the data for identifying position and status of the vehicle without connecting the navigation system with the emergency communication system terminal unit. In this respect, there is no need to provide a system for identifying position and status of the vehicle as required by the navigation system, and it is possible to simplify the structure of the navigation system.

According to still another aspect of the present invention, data from the gyro sensor for generating information such as advancing direction of the vehicle and data such as position information generated from the data received from GPS antenna by GPS receiver and possessed by the position information acquisition unit of the emergency communication system of the above basic aspect of the invention are outputted to the navigation system by the data output means based on trigger condition such as a request of the navigation system connected to external part of the emergency communication system terminal unit or a timer in the control unit. When these data are outputted to the navigation system by the data output means, using a radio signal capable to transmit and receive data without requiring wired connection is used. It is possible to transmit the data for identifying position and status of the vehicle without connecting the navigation system with the emergency communication system terminal unit. In this respect, there is no need to provide a system for identifying position and status of the vehicle as required by the navigation system, and it is possible to simplify the structure of the navigation system.

According to a still another aspect of the present invention, the navigation system is provided with means for inputting data such as position information generated from the gyro sensor for generating information including advancing direction of the vehicle from the emergency communication system terminal unit and the data received from GPS antenna by GPS receiver. In this respect, there is no need to provide a system for identifying position and status of the vehicle as required by the navigation system, and it is possible to simplify the structure of the navigation system.

According to a still another aspect of the present invention, there is provided a navigation system provided with functions to input the data from the gyro sensor for generating information such as advancing direction of the vehicle from the emergency communication system terminal unit and data such as position information generated from the data received from GPS antenna by GPS receiver, to perform map matching based on the data from the gyro sensor for generating information such as advancing direction of the vehicle and the data received from GPS antenna by the GPS receiver, and to give the information such as position of the vehicle to the user by display means such as LCD. In this respect, there is no need to provide a system for identifying position and status of the vehicle as required by the navigation system, and it is possible to simplify the structure of the navigation system.

According to still another aspect of the present invention, there is provided a navigation system with means for inputting the data generated by the gyro sensor for generating information such as advancing direction of the vehicle outputted from the emergency communication system terminal unit. In this respect, there is no need to provide a system for identifying position and status of the vehicle as required by the navigation system, and it is possible to simplify the structure of the navigation system.

According to still another aspect of the present invention, there is provided a navigation system with means for inputting data such as position information generated from the data received from GPS antenna by GPS received and outputted from the emergency communication system terminal unit. In this respect, there is no need to provide a system for identifying position information such as GPS antenna and GPS receiver as required by the navigation system, and it is possible to simplify the structure of the navigation system.

According to still another aspect of the present invention, there is provided a navigation system with means for inputting a speed pulse data indicating the present speed of the vehicle as outputted from the emergency communication system terminal unit. In this respect, there is no need to provide a device for acquiring the present speed of the vehicle such as a speed pulse acquisition processing unit as required by the navigation system, and it is possible to simplify the structure of the navigation system.

According to still another aspect of the present invention, there is provided a navigation system with means for inputting a reverse data to indicate advancing status of the vehicle such as moving forward or backward as outputted from the emergency communication system terminal unit. In this respect, there is no need to provide a reverse data acquisition unit to indicate advancing status of the vehicle such as moving forward or backward, i.e. a reverse data acquisition processing unit, as required by the navigation system. As a result, it is possible to simplify the structure of the navigation system.

According to still another aspect of the present invention, there is provided a navigation system with means for inputting a latitude and longitude data as outputted from the emergency communication system terminal unit. In this respect, there is no need to provide an arithmetic unit for calculating the latitude and longitude data as required by the navigation system, and it is possible to simplify the structure of the navigation system.

According to still another aspect of the present invention, there is provided a navigation system with means for inputting the data necessary for performing map matching as outputted from the emergency communication system terminal unit. In this respect, there is no need to provide an arithmetic unit for calculating the data necessary for performing map matching as required by the navigation system, and it is possible to simplify the structure of the navigation system.

According to still another aspect of the present invention, there is provided a navigation system, which is characterized in that a non-synchronizing serial signal to transfer only with data signal is used as means for inputting data such as the data from the gyro sensor for generating information including advancing direction of the vehicle from the emergency communication system terminal unit and the data received from GPS antenna by GPS receiver. In this respect, there is no need to provide a system for identifying position and status of the vehicle as required by the navigation system, and it is possible to simplify the structure of the navigation system.

According to still another aspect of the present invention, there is provided a navigation system, which is characterized in that a synchronizing signal using frame synchronizing signal, clock synchronizing signal, etc. and used as means for inputting data such as the data from the gyro sensor for generating information including advancing direction of the vehicle from the emergency communication system terminal unit and the data received from GPS antenna by GPS receiver. In this respect, there is no need to provide a system for identifying position and status of the vehicle as required by the navigation system, and it is possible to simplify the structure of the navigation system.

According to still another aspect of the present invention, there is provided a navigation system, which is characterized in that a bus signal using parallel signal is used as means for inputting data such as the data from the gyro sensor for generating information including advancing direction of the vehicle from the emergency communication system terminal unit and the data received from GPS antenna by GPS receiver. In this respect, there is no need to provide a system for identifying position and status of the vehicle as required by the navigation system, and it is possible to simplify the structure of the navigation system.

According to still another aspect of the present invention, there is provided a navigation system, which is characterized in that a LAN signal used in network communication is used as means for inputting data such as the data from the gyro sensor for generating information including advancing direction of the vehicle from the emergency communication system terminal unit and the data received from GPS antenna by GPS receiver. In this respect, there is no need to provide a system for identifying position and status of the vehicle as required by the navigation system, and it is possible to simplify the structure of the navigation system.

According to still another aspect of the present invention, there is provided a navigation system, which is characterized in that an infrared signal capable to transmit and receive data without requiring wired connection is used as means for inputting data such as the data from the gyro sensor for generating information including advancing direction of the vehicle from the emergency communication system terminal unit and the data received from GPS antenna by GPS receiver. In this respect, the data for identifying position and status of the vehicle can be inputted without connection for inputting data from the emergency communication system. In this respect, there is no need to provide a system for identifying position and status of the vehicle as required by the navigation system, and it is possible to simplify the structure of the navigation system.

According to still another aspect of the present invention, there is provided a navigation system, which is characterized in that a radio signal capable to transmit and receive the data without requiring wired connection is used as means for inputting data such as the data from the gyro sensor for generating information including advancing direction of the vehicle from the emergency communication system terminal unit and the data received from GPS antenna by GPS receiver. In this respect, the data for identifying position and status of the vehicle can be inputted without connection for inputting the data from the emergency communication system. In this respect, there is no need to provide a system for identifying position and status of the vehicle as required by the navigation system, and it is possible to simplify the structure of the navigation system.

### BRIEF DESCRIPTION OF THE DRAWINGS

Fig. 1 is a block diagram showing an arrangement of a terminal unit of an emergency communication system in a first embodiment and others of the present invention;
Fig. 2 is a block diagram of an arrangement of a terminal unit of an emergency communication system in a fifth embodiment and others of the present invention;
Fig. 3 is a block diagram showing an arrangement of a terminal unit of an emergency communication system in a sixth embodiment and others of the present invention; and
Fig. 4 is a block diagram showing an arrangement of a terminal unit of an emergency communication system in a fifteenth embodiment and others of the present invention.

### BEST MODE FOR CARRYING OUT THE INVENTION

Description will be given below on embodiments of an emergency communication system of the present invention referring to the drawings.

### (Embodiment 1)

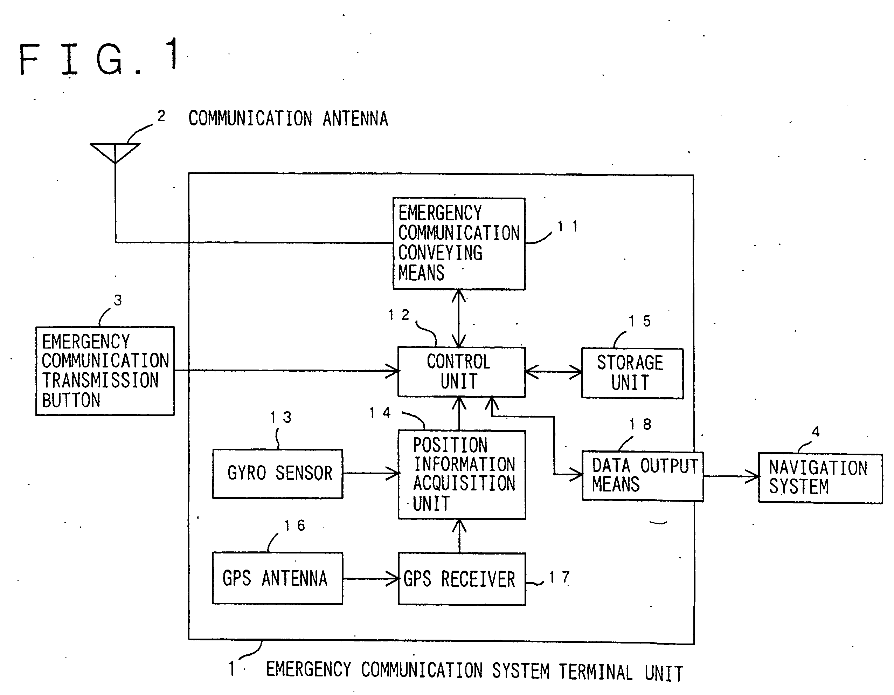

Fig. 1 is a block diagram showing an arrangement of a first embodiment of an emergency communication system of the present invention. In Fig. 1, reference numeral 1 represents a terminal unit of an emergency communication system installed on a vehicle such as automobile, and it is provided with a function to transmit data such as the present position of the vehicle, registered number of vehicle, etc. to a center for controlling the emergency communication system such as police station, fire department, emergency communication center, etc. at the time of emergency such as traffic accident, sudden illness, etc. Reference numeral 2 indicates a communication antenna used for transmitting a transmission signal from emergency communication conveying means 11 to a base station of a communication firm and for outputting receiving signal from the communication firm to the emergency communication conveying means 11. Reference numeral 3 denotes an emergency communication transmission button to be pressed by a user in an emergency such as traffic accident, sudden illness, etc. and to generate an operation signal for starting transmission processing. Reference numeral 4 indicates a navigation system to be connected to external portion of the terminal unit 1 of the emergency communication system.

In the terminal unit 1 of the emergency communication system, reference numeral 11 represents emergency communication conveying means. To a transmission request signal from a control unit 12, telephone transmission processing is started to a communication partner corresponding to a telephone number inputted from the control unit 12 via a base station of a communication firm. When a signal to indicate the switching to communication status is received, i.e. when a response from the communication partner or a line-busy signal is received, it is recognized that as it has been switched to communication status. Then, it is switched over to voice communication control or data communication control, and a signal to notify that it has been switched over to communication status is outputted to the control unit 12. Further, data such as information on advancing direction of vehicle, position information, etc. inputted from the control unit 12 is transmitted to a communication partner corresponding to the above telephone number, i.e. to a center for controlling emergency communication system such as police station, emergency communication center, etc. via a base station of the communication firm.

Based on the operation signal from the emergency communication transmission button 3, the control unit 12 recognizes that there has been a request for emergency communication. To start emergency communication processing, a signal for requesting the present position information is outputted to a position information acquisition unit 14, and data such as information on advancing direction of the vehicle, position information etc. is received from the position information acquisition unit 14. Further, a telephone number of the center for controlling emergency communication system such as police station, emergency communication center, etc. is acquired from a storage unit 15. Using the telephone number, a transmission request for telephone is given to the emergency communication conveying means 11. When a signal to switch over to communication status is received, i.e. when a response from the communication partner corresponding to the telephone number or a signal to switch over to communication status such as a line-busy signal is received, from the emergency communication conveying means 11, it is recognized that it has been switched over to communication status. Then, the data such as information on advancing direction of the vehicle or position information obtained from the position information acquisition unit 14 is outputted to the emergency communication conveying means 11 to the communication partner corresponding to the telephone number via a base station of a communication firm as a signal to the center controlling the emergency communication system such as police station, emergency communication center, etc.

A gyro sensor 13 generates information such as advancing direction of the vehicle, and this is outputted to the position information acquisition unit 14. In response to the position information requesting signal from the control unit 12, data including position information is generated based on the data from the gyro sensor 13 for generating information such as advancing direction of the vehicle and on the data received from a GPS antenna 16 by a GPS receiver 17. Further, the position information acquisition unit 14 outputs the data to the control unit 12, i.e. the data such as advancing direction of the vehicle inputted from the gyro sensor 13 and the data such as position information as generated above.

A storage unit stores information such as telephone number of the center for controlling emergency communication system, e.g. police station, fire department, emergency communication center, etc., registered number of the vehicle with the emergency communication system terminal unit 1 installed on it, and the data of registered person. Further, based on a request signal from the control unit 12, information is outputted such as telephone number of the center controlling the emergency communication system, e.g. police station, emergency communication center, etc., registered number of the vehicle with the emergency communication system terminal unit 1 installed on it, and data of registered person, etc.

Reference numeral 16 represents a GPS antenna for receiving data from a plurality of satellites, and reference numeral 17 is a GPS receiver for outputting the data to calculate position information to the position information acquisition unit 14 based on the data inputted from the GPS antenna 16.

Reference numeral 18 represents data output means, and this outputs data such as advancing direction of the vehicle inputted from the gyro sensor 13, or the data such as position information inputted from the GPS receiver 17 to a navigation system 4 connected to external part of the terminal unit 1 of the emergency communication system.

Next, description will be given on operation of this first embodiment. In Fig. 1, in the emergency communication system installed on a vehicle such as automobile, the user presses the emergency communication button 3 in an emergency such as traffic accident, sudden illness, etc. When the user presses the emergency communication button 3, an operation signal to indicate that the button has been pressed is outputted to the control unit 12 within the terminal unit 1 of the emergency communication system. The control unit 12 recognizes that emergency communication has been requested by the operation signal from the emergency communication button 3. Then, emergency communication processing is started, and a signal to request the present position information is outputted to the position information acquisition unit 14.

Based on the position information requesting signal from the control unit 12, the position information acquisition unit 14 inputs the data from the gyro sensor 13 for generating information such as advancing direction of the vehicle. Also, the data received from GPS antenna 16 by the GPS receiver 17 is inputted. Based on the data such as advancing direction of the vehicle inputted from the gyro sensor 13 and the data inputted from GPS receiver 17, the position information acquisition unit 14 generates position information, and this is outputted to the control unit 12 together with the information on the advancing direction.

The control unit 12 acquires the telephone number of the center controlling the emergency communication system such as police station, fire department, emergency communication center, etc. from the storage unit 15 and requests transmission of telephone to the emergency communication conveying means 11 using the telephone number.

The emergency communication conveying means 11 starts the telephone transmission processing to the communication partner corresponding to the telephone number via a base station of a communication firm using a communication antenna 2. When a transmission response from the communication partner or a signal to switch over to communication status such as line-busy signal is received, the emergency communication conveying means 11 recognizes that it has been switched over the communication status. Then, it is switched over to voice communication control or data communication control, and a signal to notify that it has been switched over to communication status is outputted to the control unit 12.

The control unit 12 judges that communication has been successful, and the data such as information on the advancing direction of the vehicle or position information obtained from the position information acquisition unit 14 is transmitted to a communication partner corresponding to the telephone number, i.e. the center controlling the emergency communication system such as police station, emergency communication center, etc. via a base station of a communication firm.

Apart form the emergency communication transmission, the control unit 12 outputs the data to identify position and status of the vehicle, i.e. advancing direction of the vehicle inputted from the gyro sensor 13, position information inputted from the GPS receiver 17 to the external navigation system 4 using data output means 18.

### (Embodiment 2)

Next, description will be given on operation of an emergency communication system of the present invention according to a second embodiment. For the emergency communication system terminal unit 1, in addition to the emergency communication transmission processing as described above, in response to trigger conditions such as a data request from the control unit 12 or a timer, the position information acquisition unit 14 generates position information based on the data such as advancing direction of the vehicle inputted from the gyro sensor 13 and the data inputted from the GPS receiver 17, and this is outputted to the control unit 12 together with the data on advancing direction. The control unit 12 outputs the data to identify position and status of the vehicle, such as the data on advancing direction of the vehicle inputted from the position information acquisition unit 14 or the data such as position information to the data output means 18. The data output means 18 outputs the data inputted from the control unit 12 to a navigation system 4 connected to external part of the terminal unit 1 of the emergency communication system.

### (Embodiment 3)

Next, description will be given on an emergency communication system of the present invention according to a third embodiment. Description on the third embodiment will be given referring to Fig. 1. In Fig. 1, the position information acquisition unit 14 inputs data such as advancing direction of the vehicle inputted from the gyro sensor 13 and outputs it to the control unit 12. In response to trigger conditions such as a data request from the navigation system 4 connected to the data output means 18 or a timer, etc. the control unit 12 outputs the data such as advancing direction of the vehicle to the navigation system 4 connected to the data output means 18 via the data output means 18.

### (Embodiment 4)

Next, description will be given on operation of an emergency communication system of the present invention in a fourth embodiment. For the fourth embodiment, description will be given referring to Fig. 1. In Fig. 1, based on the data received from GPS antenna 16 by GPS receiver 17, the position information acquisition unit 14 generates data such as position information, and this is outputted to the control unit 12 together with the data on advancing direction. Based on the trigger conditions such as a data request from the navigation system 4 connected to the data output means 18 or a timer, the control unit 12 outputs the data such as position information to the navigation system 4 connected to the data output means 18 via the data output means 18.

### (Embodiment 5)

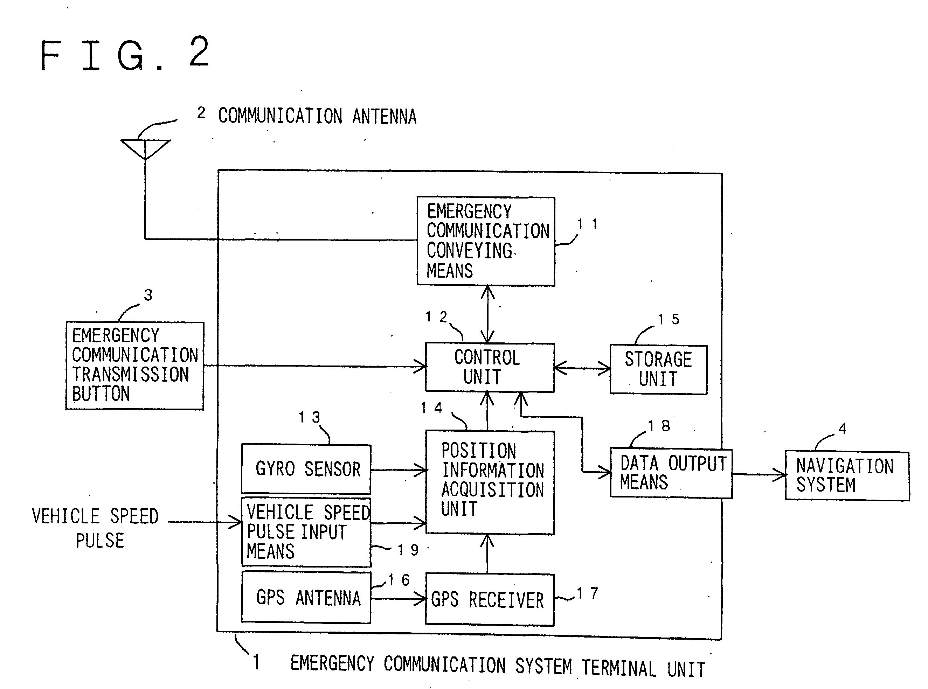

Next, description will be given on operation of an emergency system of the present invention in a fifth embodiment. Fig. 2 is a block diagram showing an arrangement of a fifth embodiment. In Fig. 2, the position information acquisition unit 14 inputs a vehicle speed pulse data from a vehicle speed sensor mounted on wheels via vehicle speed pulse input means 19 and outputs it to the control unit 12. Based on trigger condition such as a data request from the navigation system 4 connected to the data output means 18 or a timer, the control unit 12 outputs the vehicle speed pulse data to the navigation system 4 connected to the data output means 18 via the data output means 18.

### (Embodiment 6)

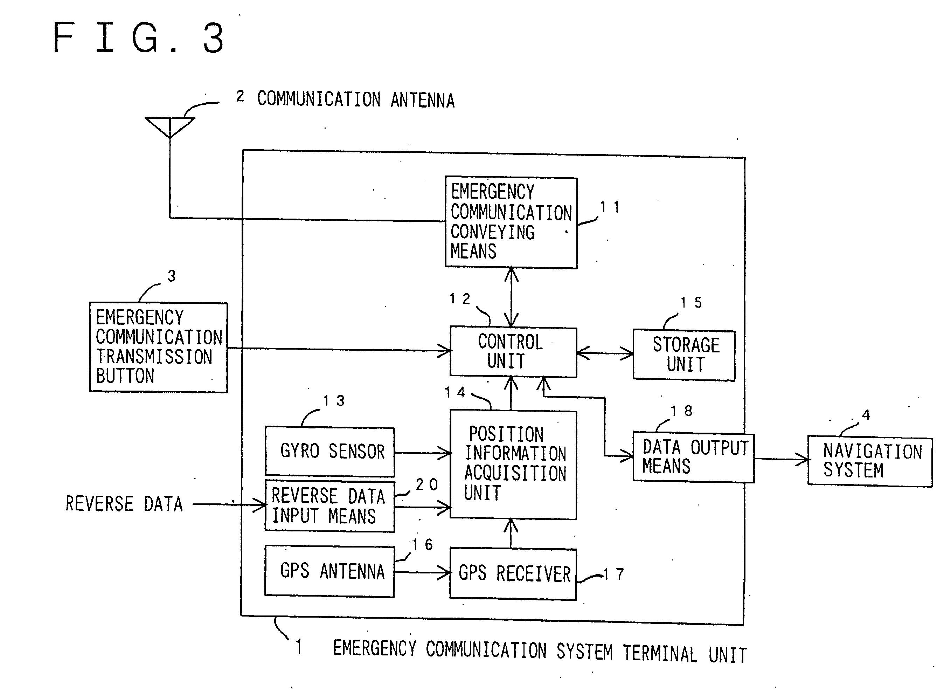

Next, description will be given on operation of an emergency communication system of the present invention in a sixth embodiment. Fig. 3 is a block diagram showing an arrangement of a sixth embodiment. In Fig. 3, the position information acquisition unit 14 inputs a reverse data from a reverse sensor mounted on a reverse lamp, which is lighted up when gear is set to back position via reverse data input means 20, and outputs it to the control unit 12. Based on the trigger condition such as a data request from the navigation system 4 connected to the data output means 18 or a timer, the control unit 12 outputs the reverse data to the navigation system 4 connected to the data output means 18 via the data output means 18.

### (Embodiment 7)

Next, description will be given on operation of an emergency communication system of the present invention in a seventh embodiment. The seventh embodiment will be described referring to Fig. 1. In Fig. 1, from the data such as advancing direction of the vehicle inputted from the gyro sensor 13 or from the data inputted from the GPS receiver 17, the position information acquisition unit 14 generates position information to identify position and status of the vehicle, and this is outputted to the control unit 12 together with the data of advancing direction. From the data to identify position and status of the vehicle, the control unit 12 calculates latitude and longitude of the present position of the vehicle, and this is outputted to the navigation system connected to the data output means 18 via the data output means 18.

### (Embodiment 8)

Next, description will be given on operation of an emergency communication system of the present invention in an eighth embodiment. The eighth embodiment will be described referring to Fig. 1. In Fig. 1, based on the data such as advancing direction of the vehicle inputted from the gyro sensor 13 and the data inputted from the GPS receiver 17, the position information acquisition unit 14 generates position information and outputs the data to identify position and status of the vehicle to the control unit 12. From the data to identify position and status of the vehicle, the control unit 12 calculates the data necessary for map matching on the navigation system 4, and this is outputted to the navigation system 4 connected to the data output means 18 via the data output means 18.

### (Example 9)

Next, description will be given on operation of an emergency communication system in a ninth example. The ninth embodiment will be described referring to Fig. 1. In Fig. 1, the position information acquisition unit 14 generates position information from the data such as advancing direction of the vehicle inputted from the gyro sensor 13 and the data inputted from the GPS receiver 17, and this is outputted to the control unit 12. The control unit 12 outputs the data to identify position and status of the vehicle to the navigation system 4 using a non-synchronizing serial signal transferred only by data communication via the data output means 18.

### (Example 10)

Next, description will be given on operation of an emergency communication system of the present example in a tenth embodiment. The tenth embodiment will be described referring to Fig. 1. In Fig. 1, the position information acquisition unit 14 outputs the data to identify position and status of the vehicle such as position information generated from the data, e.g. advancing direction of the vehicle inputted from the gyro sensor 13 and the data inputted from the GPS receiver 17 to the control unit 12. The control unit 12 outputs the data to identify position and status of the vehicle to the navigation system 4 using a synchronizing serial signal such as frame synchronizing signal, clock synchronizing signal, etc. via the data output means 18.

### (Example 11)

Next, description will be given on operation of an emergency communication system of the present example in an eleventh embodiment. The eleventh embodiment will be described referring to Fig. 1. In Fig. 1, the position information acquisition unit 14 outputs the data such as advancing direction of the vehicle inputted from the gyro sensor 13 to the control unit 12. From this data and the data inputted from the GPS receiver 17, position information to identify position and status of the vehicle is generated, and this is outputted to the control unit 12. The control unit 12 outputs the data to identify position and status of the vehicle to the navigation system 4 by a bus signal using parallel signal via the data output means 18.

### (Example 12)

Next, description will be given on operation of an emergency communication system of the present example in a twelfth embodiment. The twelfth embodiment will be described referring to Fig. 1. In Fig. 1, the position information acquisition unit 14 generates position information to identify position and status of the vehicle from the data such as advancing direction of the vehicle inputted from the gyro sensor 13 and the data inputted from the GPS receiver 17, and this is outputted to the control unit 12. The control unit 12 outputs the data to identify position and status of the vehicle to the navigation system 4 using LAN, adopts format such as IE-BUS, ARCNET, etc. used in network communication, via the data output means 18.

### (Example 13)

Next, description will be given.on operation of an emergency communication system in a thirteenth example. The thirteenth example will be described referring to Fig. 1. In Fig. 1, the position information acquisition unit 14 generates position information to identify position and status of the vehicle from the data such as advancing direction of the vehicle inputted from the gyro sensor 13 and the data inputted from the GPS receiver 17, and this is outputted to the control unit 12. The control unit 12 outputs the data to identify position and status of the vehicle to the navigation system 4 using an infrared signal requiring no wired connection such as infrared output element via the data output means 18.

### (Example 14)

Next, description will be given on operation of an emergency communication system of the present example in a fourteenth embodiment. The fourteenth example will be described referring to Fig. 1. In Fig. 1, the position information acquisition unit 14 generates position information to identify position and status of the vehicle based on the data such as advancing direction of the vehicle inputted from the gyro sensor 13 and the data inputted from the GPS receiver 17, and this is outputted to the control unit 12. The control unit outputs the position information to identify position and status of the vehicle to the navigation system 4 using wireless means such as FM modulation requiring no wired connection such as wireless output system via the data output means 18.

### (Example 15)

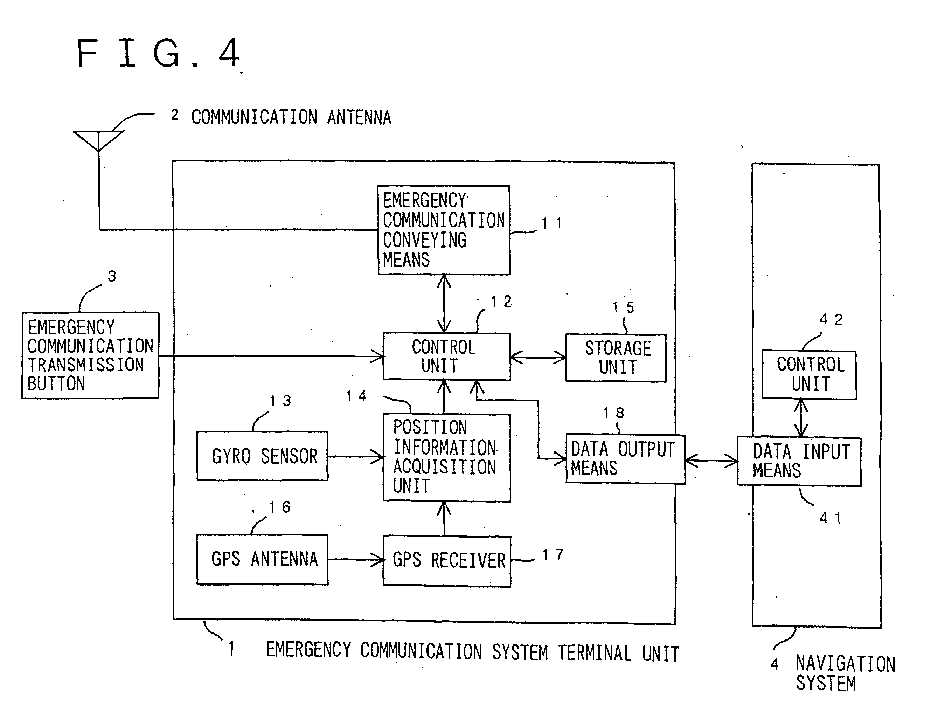

Next, description will be given on operation of an emergency communication system of the present example in a fifteenth example and the navigation system 4. Fig. 4 is a block diagram showing an arrangement of the fifteenth embodiment. In Fig. 4, the data output means 18 in the terminal unit 1 of the emergency communication system outputs the data to identify position and status of the vehicle outputted from the control unit 12 in the terminal unit of the emergency communication system to data input means 41 in the navigation system 4, which serves as an interface of the emergency communication system terminal unit 1. The data input means 41 outputs the data to identify position and status of the vehicle to a control unit 42 in the navigation system 4.

### (Example 16)

Next, description will be given on operation of an emergency communication system of the present example in a sixteenth example and the navigation system 4. The sixteenth embodiment will be described referring to Fig. 4. In Fig. 4, the data output means 18 in the emergency communication system terminal unit 1 outputs the data to identify position and status of the vehicle outputted from the control unit 12 in the emergency communication system terminal unit 1 to data input means 41 in the navigation system 4, which serves as an interface of the emergency communication system terminal unit 1. The data input means 41 outputs the data to identify position and status of the vehicle to a control unit 42 in the navigation system 4. The control unit 42 performs map matching from the data to identify position and status of the vehicle and notifies the information such as position of the vehicle to the user using display means such as LCD.

### (Example 17)

Next, description will be given on operation of an emergency communication system of the present example in a seventeenth example and the navigation system 4. The seventeenth embodiment will be described referring to Fig. 4. In Fig. 4, data output means 18 provided in the emergency communication system terminal unit 1 outputs an information of a gyro sensor 13 for generating information such as advancing direction and outputted from a control unit 12 in the emergency communication system terminal unit 1 to data input means 41 in a navigation system 4, which serves as an interface for the emergency communication system terminal unit 1. The data input means 41 outputs the information from the gyro sensor 13 for generating information such as advancing direction to a control unit 42 in the navigation system 4.

### (Example 18)

Next, description will be given on operation of the emergency communication system and the navigation system 4 in an eighteenth example. For the eighteenth embodiment, description will be given referring to Fig. 4. In Fig. 4, data output means 18 provided in the emergency communication system terminal unit 1 outputs data received from a GPS antenna by a GPS receiver 17 as outputted from the control unit 12 in the emergency communication system terminal unit 1 to data input means 41 in the navigation system 4, which serves as an interface for the emergency communication system terminal unit 1. The data input means 41 outputs the data received from the GPS antenna 16 by the GPS receiver 17 to the control unit 42 in the navigation system 4.

### (Example 19)

Next, description will be given on operation of the emergency communication system and the navigation system 4 of the present example in a nineteenth example. On the nineteenth embodiment, description will be given referring to Fig. 4. In Fig. 4, data output means 18 provided in the emergency communication system terminal unit 1 outputs a speed pulse data showing the present speed of the vehicle as outputted from the control unit 12 in the emergency communication system terminal unit 1 to data input means 41 in the navigation system 4, serving as an interface of the emergency communication system terminal unit 1. The data input means 41 outputs the speed pulse data showing the present speed of the vehicle to the control unit 42 in the navigation system 4.

### (Example 20)

Next, description will be given on operation of the emergency communication system and the navigation system 4 of the present example in a twentieth example. For the twentieth embodiment description will be given referring to Fig. 4. In Fig. 4, data output means 18 provided in the emergency communication system terminal unit 1 outputs a reverse data showing advancing status of the vehicle such as moving forward or backward as outputted from the control unit 12 in the emergency communication system terminal unit 1 to data input means 41 in the navigation system 4, which serves as an interface for the emergency communication system terminal unit 1. The data input means 41 outputs the reverse data showing the moving status of the vehicle such as moving forward or backward to the control unit 42 in the navigation system 4.

### (Example 21)

Next, description will be given on operation of the emergency communication system and the navigation system 4 of the present example in a twenty-first example. For the twenty-first embodiment, description will be given referring to Fig. 4. In Fig. 4, data output means 18 provided in the emergency communication system terminal unit 1 outputs a latitude and longitude data showing position of the vehicle as outputted from the control unit 12 in the emergency communication system terminal unit 1 to data input means 41 in the navigation system 4, which serves as an interface for the emergency communication system terminal unit 1. The data input means 41 outputs the reverse data showing the moving status of the vehicle such as moving forward or backward to the control unit 42 in the navigation system 4.

### (Example 22)

Next, description will be given on operation of the emergency communication system and the navigation system 4 of the present example in a twenty-second example. For the twenty-second embodiment, description will be given referring to Fig. 4. In Fig. 4, data output means 18 provided in the emergency communication system terminal unit 1 outputs a data necessary for map matching as outputted from the control unit 12 in the emergency communication system terminal unit 1 to data input means 41 in the navigation system 4, which serves as an interface for the emergency communication system terminal unit 1. The data input means 41 outputs the reverse data showing the moving status of the vehicle such as moving forward or backward to the control unit 42 in the navigation system 4.

### (Example 23)

Next, description will be given on operation of the emergency communication system and the navigation system 4 of the present example in a twenty-third example. For the twenty-third embodiment, description will be given referring to Fig. 4. In Fig. 4, data output means 18 provided in the emergency system terminal unit 1 outputs a data for identifying position and status of the vehicle as outputted from the control unit 12 in the emergency communication system terminal unit 1 to the data input means 41 in the navigation system 4, which serves as an interface for the emergency communication system terminal unit 1, using a non-synchronizing serial signal format to transfer only in data signal, i.e. a communication format specified by the emergency communication system terminal unit 1 and the navigation system 4. The data input means 41 outputs the data for identifying position and status of the vehicle to the control unit 42 in the navigation system 4.

### (Example 24)

Next, description will be given on operation of the emergency communication system and the navigation system 4 of the present example in a twenty-fourth example. For the twenty-fourth embodiment, description will be given referring to Fig. 4. In Fig. 4, the data output means 18 provided in the emergency communication system terminal unit 1 outputs a data for identifying position and status of the vehicle as outputted from the control unit 12 in the emergency communication system terminal unit 1 to the data input means 41 in the navigation system 4, which serves as an interface for the emergency communication system terminal unit 1, using a synchronizing serial signal format such as frame synchronizing signal, clock synchronizing signal, etc., i.e. a communication format specified by the emergency communication system terminal unit 1 and the navigation system 4. The data input means 41 outputs the data for identifying position and status of the vehicle to the control unit 42 in the navigation system 4.

### (Example 25)

Next, description will be given on operation of the emergency communication system and the navigation system 4 of the present example in a twenty-fifth example. For the twenty-fifth embodiment, description will be given referring to Fig. 4. In Fig. 4, the data output means 18 provided in the emergency communication system terminal unit 1 outputs a data for identifying position and status of the vehicle as outputted from the control unit 12 in the emergency communication system terminal unit 1 to the data input means 41 in the navigation system 4, which serves as an interface for the emergency communication system terminal unit 1 using a bus signal format based on parallel signal, i.e. a communication format specified by the emergency communication system terminal unit 1 and the navigation system 4. The data input means 41 outputs the data for identifying position and status of the vehicle to the control unit 42 in the navigation system 4.

### (Example 26)

Next, description will be given on operation of the emergency communication system and the navigation system 4 of the present example in a twenty-sixth example. For the twenty-sixth embodiment, description will be given referring to Fig. 4. In Fig. 4, the data output means 18 provided in the emergency communication system terminal unit 1 outputs a data for identifying position and status of the vehicle as outputted from the control unit 12 in the emergency communication system terminal unit 1 to the data input means 41 in the navigation system 4, which serves as an interface for the emergency communication system terminal unit 1, using a LAN signal format such as IE-BUS system, ARCNET system, etc. used in network communication, i.e. a communication format specified by the emergency communication system terminal unit 1 and the navigation system 4. The data input means 41 outputs the data for identifying position and status of the vehicle to the control unit 42 in the navigation system 4.

### (Example 27)

Next, description will be given on operation of the emergency communication system and the navigation system 4 of the present example a twenty-seventh example. For the twenty-seventh embodiment, description will be given referring to Fig. 4. In Fig. 4, the data output means 18 provided in the emergency communication system terminal unit 1 outputs a data for identifying position and status of the vehicle as outputted from the control unit 12 in the emergency communication system terminal unit 1 to the data input means 41 in the navigation system 4, which serves as an interface for the emergency communication system terminal unit 1, using an infrared signal requiring no wired connection, i.e. a communication format specified by the emergency communication system terminal unit 1 and the navigation system 4. The data input means 41 outputs the data for identifying position and status of the vehicle to the control unit 42 in the navigation system 4.

### (Example 28)

Next, description will be given on operation of the emergency communication system and the navigation system 4 of the present example in a twenty-eighth example. For the twenty-eighth embodiment, description will be given referring to Fig. 4. In Fig. 4, the data output means 18 provided in the emergency communication system terminal unit 1 outputs a data for identifying position and status of the vehicle as outputted from the control unit 12 in the emergency communication system terminal unit 1 to the data input means 41 in the navigation system 4, which serves as an interface for the emergency communication system terminal unit 1, using a radio signal requiring no wired connection, i.e. a communication format specified by the emergency communication system terminal unit 1 and the navigation system 4. The data input means 41 outputs the data for identifying position and status of the vehicle to the control unit 42 in the navigation system 4.

### INDUSTRIAL APPLICABILITY

As it is evident from the above description, the emergency communication system of the present invention is installed on a vehicle such as automobile and is provided with emergency communication conveying means for telephone transmission via a base station of a communication firm to a communication center for controlling emergency communication system such as police station, emergency communication center, etc. The emergency communication system is provided with data output means for outputting data such as data on advancing direction of the vehicle inputted from a gyro sensor in the emergency communication system terminal unit, data such as position information inputted from a GPS receiver provided in the emergency communication system terminal unit to a navigation system connected to external part of the emergency communication system terminal unit. As a result, there is no need to provide a system for identifying position and status of the vehicle such as gyro sensor for generating information, e.g. advancing direction of the vehicle, GPS receiver for generating data, e.g. position information from the data inputted from GPS antenna, and GPS antenna for receiving data from satellites. When this emergency communication system terminal unit is provided on a vehicle, it is possible to simplify the structure of the navigation system.

## Claims

1. An emergency communication system with an emergency communication system terminal unit to be mounted on a vehicle, having a gyro sensor (13) for detecting advancing direction of the vehicle, said emergency communication system terminal unit being arranged to transmit emergency information with positional information indicative of a position of the vehicle generated by using said advancing direction of the vehicle, **characterized by**:
data output means (18) for outputting data including advancing direction of the vehicle detected by said gyro sensor (13) to a navigation system (4) connected to external part of the emergency communication system terminal unit, wherein said navigation system (4) includes means for informing a user of the vehicle of a present position of said vehicle using said data from said data output means (18), thereby it is possible to inform, by said navigation system (4), a position of the vehicle without having a gyro sensor within said navigation system (4) per se.

2. The emergency communication system according to claim 1, wherein said emergency communication system terminal unit further comprises:
a GPS antenna (16) for receiving signal waves from a plurality of satellites;
a GPS receiver (17) for detecting predetermined data respectively from a plurality of signal waves received by said GPS antenna;
a position information acquisition unit (14) for generating position information to indicate position of the vehicle based on a signal from the gyro sensor (13) and the GPS receiver (17);
a storage unit (15) for storing various types of data;
emergency communication conveying means (11) for transmitting emergency information using a telephone number stored in advance in said storage unit (15) and
a control unit (12) for controlling the entire emergency communication system terminal unit, thereby it is possible to indicate, by said navigation system, a position of the vehicle without having a GPS antenna and a GPS receiver within said navigation system per se.

3. The emergency communication system according to claim 1, wherein said emergency communication system terminal unit further comprises:
an emergency communication transmission button (3) for starting transmission processing when pressed by a user in an emergency.

4. An emergency communication system according to claim 2 wherein a position information indicating position and status of the vehicle as generated according to a data from said gyro sensor and to a signal from said GPS receive from the data necessary for performing map matching and possessed by the position information acquisition unit to said navigation system by said data output means based on trigger condition such as a request of the navigation system or a timer in the control unit.

5. An emergency communication system according to claim 2 wherein a speed pulse data indicating the present speed of the vehicle as possessed by said position information acquisition unit is outputted to said navigation system by the data output means based on trigger condition such as a request of the navigation system or a timer in the control unit.

6. An emergency communication system according to claim 2 wherein a reverse data indicating moving status of the vehicle such as forward moving of backward moving and possessed by said position information acquisition unit is outputted to said navigation system by the data output means based on trigger condition such as a request of the navigation system or a timer in the control unit.

7. An emergency communication system according to claim 2 wherein a data of latitude and longitude as possessed by said position information acquisition unit is outputted to said navigation system by said data output means based on trigger condition such'as a request of the navigation system or a timer in the control unit.

8. An emergency communication system according to claim 2 wherein a data necessary for performing map matching and possessed by said position information acquisition unit is outputted to said navigation system by the data output means based on trigger condition such as a request of the navigation system or a timer in the control unit.

## Patentansprüche

1. Notfall-Kommunikationssystem mit einer an einem Fahrzeug anzubringenden Notfall-Kommunikationssystem-Endgeräteeinheit, mit einem Kreiselsensor (13) zum Erfassen der Fortbewegungsrichtung des Fahrzeugs, wobei die Notfall-Kommunikationssystem-Endgeräteeinheit zum Übermitteln von Notfallinformationen mit Positionsinformationen, die eine Position des Fahrzeugs angeben und unter Verwendung der Fortbewegungsrichtung des Fahrzeugs erzeugt sind, ausgebildet ist, **gekennzeichnet durch**:
Datenausgabemittel (18) zum Ausgeben von Daten einschließlich der von dem Kreiselsensor (13) festgestellten Fortbewegungsrichtung des Fahrzeugs an ein Navigationssystem (4), das mit einem externen Teil der Notfall-Kommunikationssystem-Engeräteeinheit verbunden ist, wobei das Navigationssystem (4) Mittel zum Informieren eines Nutzers des Fahrzeugs über eine derzeitige Position des Fahrzeugs unter Verwendung der Daten von den Datenausgabemitteln (18) umfasst, wodurch es möglich ist, mittels des Navigationssystems (4) über eine Position des Fahrzeugs zu informieren, ohne einen Kreiselsensor in dem Navigationssystem (4) per se haben zu müssen.

2. Notfall-Kommunikationssystem nach Anspruch 1, wobei die Notfall-Kommunikationssystem-Endgeräteeinheit des weiteren folgendes umfasst:
eine GPS-Antenne (16) zum Empfangen von Signalwellen von einer Mehrzahl von Satelliten,
einen GPS-Empfänger (17) zum Erfassen jeweiliger vorgegebener Daten von einer Mehrzahl von durch die GPS-Antenne empfangenen Signalwellen,
eine Positionsinformations-Erfassungseinheit (14) zum Erzeugen von Positionsinformationen, um die Position des Fahrzeugs basierend auf einem Signal des Kreiselsensors (13) und des GPS-Empfängers (17) anzugeben,
eine Speichereinheit (15) zum Speichern verschiedener Typen von Daten,
Notfallkommunikations-Beförderungsmittel (11) zum Übermitteln von Notfallinformationen unter Verwendung einer vorab in der Speichereinheit (15) gespeicherten Telefonnummer und
eine Steuereinheit (12) zum Steuern der ganzen Notfall-Kommunikationssystem-Endgeräteeinheit, wodurch es möglich ist, mittels des Navigationssystems eine Position des Fahrzeugs anzugeben, ohne eine GPS-Antenne und einen GPS-Empfänger in dem Navigationssystem per se haben zu müssen.

3. Notfall-Kommunikationssystem nach Anspruch 1, wobei die Notfall-Kommunikationssystem-Endgeräteeinheit des weiteren folgendes umfasst:
eine Notfallkommunikations-Übertragungstaste (3) zum Auslösen der Übertragungsverarbeitung, wenn sie von einem Benutzer in einem Notfall gedrückt wird.

4. Notfall-Kommunikationssystem nach Anspruch 2, bei dem eine Position und Status des Fahrzeugs angebende Positionsinformation, die entsprechend Daten von dem Kreiselsensor und einem Signal von dem GPS-Empfänger anhand der zum Ausführen eines Kartenabgleichs erforderlichen Daten erzeugt und die in der Positionsinformations-Erfassungseinheit vorhanden ist, von der Datenausgabeeinrichtung auf der Grundlage einer Auslösebedingung in der Art einer Anforderung vom Navigationssystem oder von einem Zeitgeber in der Steuereinheit an das Navigationssystem ausgegeben werden.

5. Notfall-Kommunikationssystem nach Anspruch 1, wobei die gegenwärtige Geschwindigkeit des Fahrzeugs angebende Geschwindigkeitsimpulsdaten, die in der Positionsinformations-Erfassungseinheit vorhanden sind, durch die Datenausgabeeinrichtung auf der Grundlage einer Auslösebedingung in der Art einer Anforderung von dem Navigationssystem oder von einem Zeitgeber in der Steuereinheit an das Navigationssystem ausgegeben werden.

6. Notfall-Kommunikationssystem nach Anspruch 2, wobei den Bewegungszustand des Fahrzeugs in der Art einer Vorwärtsbewegung oder einer Rückwärtsbewegung angebende Gegendaten, die in der Positionsinformations-Erfassungseinheit vorhanden sind, durch die Datenausgabeeinrichtung auf der Grundlage einer Auslösebedingung in der Art einer Anforderung von dem Navigationssystem oder von einem Zeitgeber in der Steuereinheit an das Navigationssystem ausgegeben werden.

7. Notfall-Kommunikationssystem nach Anspruch 2, wobei Breiten- und Längengradangabe, die in der Positionsinformations-Erfassungseinheit vorhanden ist, durch die Datenausgabeeinrichtung auf der Grundlage einer Auslösebedingung in der Art einer Anforderung von dem Navigationssystem oder von einem Zeitgeber in der Steuereinheit an das Navigationssystem ausgegeben werden.

8. Notfall-Kommunikationssystem nach Anspruch 2, wobei zum Ausführen des Kartenabgleichs erforderliche Daten, die in der Positionsinformations-Erfassungseinheit vorhanden sind, auf der Grundlage einer Auslösebedingung in der Art einer Anforderung von dem Navigationssystem oder von einem Zeitgeber in der Steuereinheit an das Navigationssystem ausgegeben werden.

## Revendications

1. Système de communication d'urgence comprenant une unité formant terminal pour le système de communication d'urgence à monter sur un véhicule, comprenant un gyrodétecteur (13) pour détecter une direction d'avance du véhicule, ladite unité formant terminal étant agencée de manière à transmettre des informations d'urgence avec des informations de position indiquant une position du véhicule, qui sont engendrées en utilisant ladite direction d'avance du véhicule, **caractérisé par** :
des moyens de sortie de données (18) pour sortir des données qui incluent la direction d'avance du véhicule détectée par ledit gyrodétecteur (13) vers un système de navigation (4) connecté à une partie externe de l'unité formant terminal, dans lequel ledit système de navigation (4) inclut des moyens pour informer un utilisateur du véhicule d'une position actuelle dudit véhicule en utilisant lesdites données provenant desdits moyens de sortie de données (18), grâce à quoi il est possible d'informer, par ledit système de navigation (4), au sujet d'une position du véhicule sans comprendre un gyrodétecteur à l'intérieur dudit système de navigation (4) en soi.

2. Système de communication d'urgence selon la revendication 1, dans lequel ladite unité formant terminal pour le système de communication d'urgence comprend en outre :
une antenne GPS (16) pour recevoir des ondes de signaux depuis une pluralité de satellites ;
un récepteur GPS (17) pour détecter des données prédéterminées provenant respectivement d'une pluralité d'ondes de signaux reçus par ladite antenne GPS ;
une unité d'acquisition d'informations de position (14) pour engendrer des informations de position et indiquer la position du véhicule en se basant sur un signal provenant du gyrodétecteur (13) et du récepteur GPS (17) ;
une unité de stockage (15) pour stocker divers types de données ;
des moyens de transport de communication d'urgence (11) pour transmettre des informations d'urgence en utilisant un numéro de téléphone stocké à l'avance dans ladite unité de stockage (15); et
une unité de commande (12) pour commander la totalité de l'unité formant terminal du système de communication d'urgence, grâce à quoi il est possible d'indiquer, par ledit système de navigation, une position du véhicule sans comporter d'antenne GPS ni de récepteur GPS à l'intérieur dudit système de navigation en soi.

3. Système de communication d'urgence selon la revendication 1, dans lequel ladite unité formant terminal du système de communication d'urgence comprend en outre :
un bouton de transmission de communication d'urgence (3) pour commencer un traitement de transmission lorsqu'il est pressé par un utilisateur lors d'une urgence.

4. Système de communication d'urgence selon la revendication 2, dans lequel des informations de position, qui indiquent la position et l'état du véhicule, comme engendrées selon des données provenant dudit gyrodétecteur et selon un signal provenant dudit récepteur GPS, à partir des données nécessaires pour exécuter un ajustement de cartes et acquises par l'unité d'acquisition d'informations de position vers ledit système de navigation par lesdits moyens de sortie de données en se basant sur une condition de déclenchement, telle qu'une requête du système de navigation ou d'un temporisateur dans l'unité de commande.

5. Système de communication d'urgence selon la revendication 2, dans lequel des données d'impulsion de vitesse indiquant la vitesse actuelle du véhicule telles qu'acquise par ladite unité d'acquisition d'informations de position sont sorties vers ledit système de navigation par les moyens de sortie de données en se basant sur une condition de déclenchement telle qu'une requête du système de navigation ou d'un temporisateur dans l'unité de commande.

6. Système de communication d'urgence selon la revendication 2, dans lequel des données inverses qui indiquent un état de déplacement du véhicule, comme un déplacement vers l'avant ou un déplacement vers l'arrière, et acquises par ladite unité d'acquisition d'informations de position, sont sorties vers ledit système de navigation par les moyens de sortie de données en se basant sur une condition de déclenchement telle qu'une requête du système de navigation ou d'un temporisateur dans l'unité de commande.

7. Système de communication d'urgence selon la revendication 2, dans lequel des données de latitude et de longitude, telles qu'acquises par ladite unité d'acquisition d'informations de position, sont sorties vers ledit système de navigation par lesdits moyens de sortie de données en se basant sur une condition de déclenchement telle qu'une requête du système de navigation ou d'un temporisateur dans l'unité de commande.

8. Système de communication d'urgence selon la revendication 2, dans lequel des données nécessaires pour exécuter un ajustement de cartes et acquises par ladite unité d'acquisition d'informations de position sont sorties vers ledit système de navigation par les moyens de sortie de données en se basant sur une condition de déclenchement telle qu'une requête du système de navigation ou d'un temporisateur dans l'unité de commande.
